# EUROPEAN PATENT APPLICATION

(11) **EP 1 670 146 A2**
(43) Date of publication of application: **14.06.2006**
(21) Application number: 05026762.4
(22) Date of filing: 07.12.2005
(51) Int. Cl.: H04B 1/16

(54) **Power saving type mobile terminal for reducing power consumption**

(30) Priority: 09.12.2004 KR 2004103835
(71) Applicant: LG Electronics Inc., Yongdungpo-gu Seoul (KR)
(72) Inventor: Jang, Jong-Won Mullae Gongwon Hansin Apt. 1-1115, Youngdungpo-Gu Seoul (KR)
(74) Representative: Beyer, Andreas

(57) **Abstract**

A mobile terminal reduces power consumption. When a sleep mode is set in which power is supplied only to components requisite for a reception standby while power supply to the other components is cutoff, power supply to a flash memory is cut off by using a sleep mode signal such as a TCXO_EN signal with a low logic level, thereby reducing power consumption of the mobile terminal and lengthening a standby time of the mobile terminal.

## Description

### BACKGROUND OF THE INVENTION

### 1. Field of the Invention

The present invention relates to a power saving type mobile terminal for reducing power consumption.

### 2. Description of the Related Art

In general, as various functions such as a camera function, games, the wireless Internet are added to mobile terminals, users use mobile terminals more time. Accordingly, capacity of a battery supplying power to the mobile terminal has been improved to resolve some user inconvenience but there is a room to be improved.

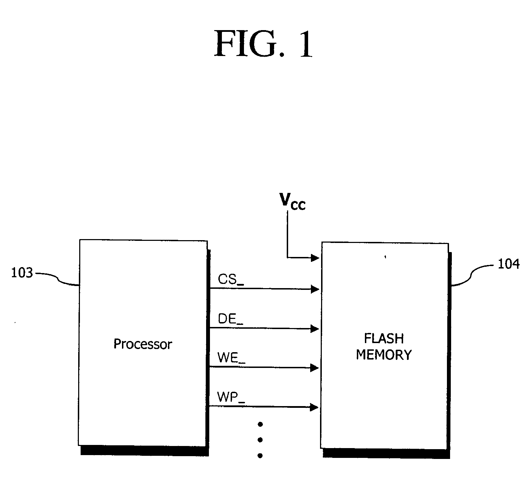

In general, a memory of a related art mobile terminal is designed as a flash memory and a RAM. The flash memory is used for storing codes or for a file system, and the RAM is used for executing actual code images. When the mobile terminal is initially booted, the code region of the flash memory is copied to the RAM, and then, as long as there is no request for it by a certain application, the flash memory is not used any longer. A state of the mobile terminal in which no application is executed and thus there is no request for accessing the flash memory is called a sleep mode, and in such a sleep mode, power is still supplied to the flash memory. This will now be described with reference to FIG. 1.

FIG. 1 is a view illustrating a connection relationship between the flash memory and a processor in the related art.

As shown in FIG. 1, certain signals such as a chip select (CS_) signal, an output enable (OE_) signal, a write enable (WE_) signal and a write protect (WP_) signal for driving the flash memory 104 are directly inputted from the processor 103 to the flash memory 104, and a driving voltage (Vcc) is also directly inputted to the flash memory 104 from an external power supply unit (generally, a battery (not shown)). Thus, the flash memory always receives a voltage no matter whether it is used or not.

However, since the flash memory is a non-volatile memory, when it is not used, power supply to thereto is not necessary, and in this sense, the related mobile terminal wastes power of the battery according to the unnecessary power consumption and thus reduces a standby time.

### BRIEF DESCRIPTION OF THE INVENTION

Therefore, an object of the present invention is to provide a power saving type mobile terminal for reducing power consumption.

To achieve at least the above objects in whole or in parts, there is provided a mobile terminal for reducing power consumption comprising: a transmitting/receiving unit for transmitting and receiving signals to and from a network; a storage unit for storing signals received through the transmitting/receiving unit and including a flash memory; a controller for controlling transmission/reception of signals, controlling a sleep mode function of the mobile terminal, and applying a sleep mode signal to a switching unit in the sleep mode; and a switching unit for cutting off power supply to the flash memory according to the sleep mode signal.

Preferably, the controller sets the mobile terminal in the sleep mode according to a certain reference such as a case where no function of the mobile terminal is used or the case where a folder or a flip is closed, and applies a sleep mode signal to the switching unit to cutoff power supply to the flash memory. The sleep mode signal is a low enable signal, namely, a power cutoff signal, and can be a TCXO_EN signal having a low logic level.

Preferably, the controller controls to release the sleep mode according to a certain reference such as a case where a certain function is operated in the sleep mode, a signal is received, or the folder is opened, and control to supply power to the flash memory by applying a power supply signal to the switching unit.

Preferably, the switching unit is formed as a field effect transistor (FET), of which a gate terminal is connected with the controller, a drain terminal is connected with an external power supply unit, and a source terminal is connected with the flash memory, so that when the switching unit receives the sleep mode signal, it is turned off.

Preferably, the mobile terminal for reducing power consumption in accordance with the present invention additionally includes a malfunction preventing unit for preventing malfunction by interrupting an operation signal inputted to the flash memory in the sleep mode. The malfunction preventing unit includes a plurality of AND gates which receive operation signals to be inputted to the flash memory and a sleep mode signal in the sleep mode and prevent the operation signals from being inputted to the flash memory.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
FIG. 1 illustrates a connection relationship between a flash memory and a processor of a mobile terminal in accordance with a related art;
FIG. 2 is block diagram showing the exemplary construction of a mobile terminal for reducing power consumption in accordance with the present invention;
FIG. 3 illustrates a connection relationship between a flash memory and a processor of the mobile terminal in accordance with the present invention;
FIG. 4 illustrates the structure of a switching unit in accordance with the present invention; and
FIG. 5 illustrates a connection relationship between a controller and the flash memory in accordance with the present invention.

### DETAILED DESCRIPTION OF THE INVENTION

The preferred embodiment of the present invention will now be described with reference to the accompanying drawings.

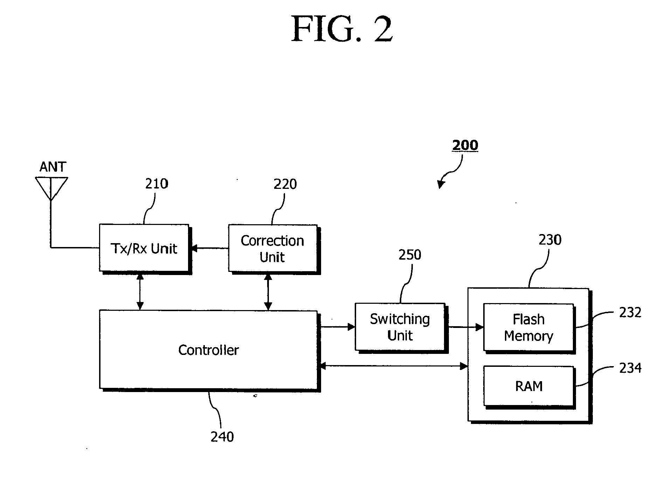

FIG. 2 is block diagram showing the exemplary construction of a mobile terminal for reducing power consumption in accordance with the present invention.

With reference to FIG. 2, a mobile terminal 200 includes a transmitting/receiving unit 210 for transmitting and receiving signals to and from a network; a correction unit 220 for correcting a change in a frequency generated during transmission and reception of signals; a storage unit 230 for storing signals received through the transmitting/receiving unit 210 and having a flash memory 232; a controller 240 for controlling transmission and reception of signals, controlling a sleep mode function of the mobile terminal 200, and applying a sleep mode signal to the correction unit 250 in a sleep mode; and a switching unit 250 for cutting off power supply to the flash memory 232 according to the sleep mode signal.

The correction unit 220 can be a temperature compensated crystal oscillator (TCXO) which controls frequency disturbance caused by a change in temperature in a crystal oscillator.

The storage unit 230 includes the flash memory 232 and a RAM 234, and stores the signals transmitted through the transmitting/receiving unit 210 under the control of the controller 240. The flash memory 232 can be a NAND type flash memory, and the RAM 234 can be an SDRAM.

The controller 240 can be a processor such as a mobile station modem (MSM) chip, and sets the mobile terminal 200 in the sleep mode according to a certain reference such as a case where any function of the mobile terminal 200 is not used for by more than a certain time, or when a folder or a flip is closed.

The sleep mode is a function for minimizing power consumption of the mobile terminal in which when the mobile terminal is not in use, power is supplied only to components requisite for a reception standby and not supplied to other components then the requisite components, so that the mobile terminal can be used as long as possible with limited power capacity of a battery.

In the sleep mode, the controller 240 applies a sleep mode signal to the correction unit 220. The sleep mode signal is a low enable (EN) signal, a power cutoff signal, and when the correction unit 220 is the TCXO, the sleep mode signal can be represented by Low TCXO_EN.

When a certain function is operated, when a signal is received, or when a folder is opened in the sleep mode, according to a certain reference, the controller 240 releases the sleep mode. When the mobile terminal is operated, the controller 240 applies a high enable signal, a power supply signal, to the correction unit 220. Namely, the enable (TCXO_EN) signal applied by the controller 240 to the correction unit 220 is controlled into a high logic level to supply power to the correction unit 220, and when a low enable signal is applied in the sleep mode, the enable signal is dropped to a low logic level to cut off power supply to the correction unit 220.

The switching unit 250 cuts off power applied to the flash memory 232 by using a sleep mode signal applied by the controller 240 to the correction unit 220, namely, a power cutoff signal of the correction unit 220. In addition, the switching unit 250 supplies power to the flash memory 232 according to the power supply signal applied by the controller 240 to the correction unit 220.

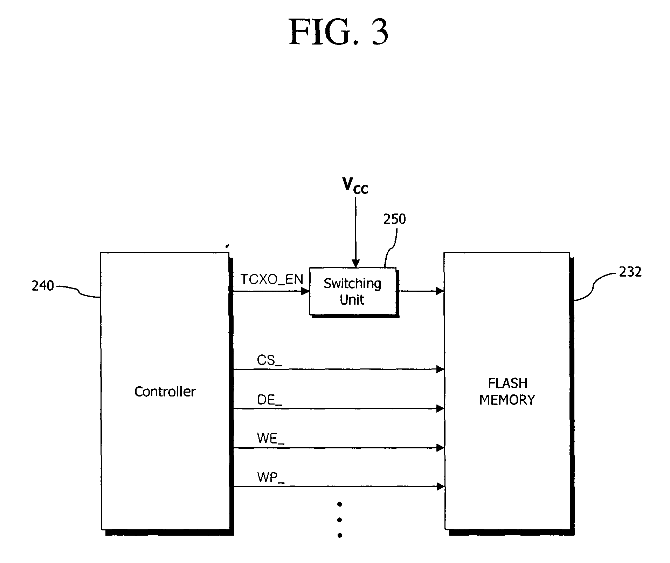

FIG. 3 illustrates a connection relationship between a flash memory and a processor of the mobile terminal in accordance with the present invention.

As shown in FIG. 3, the switching unit 250 is connected with a power supply terminal of the flash memory 232, and the enable signal (TCXO_EN) signal applied by the controller 240 to the correction unit 220 is used to control the switching unit 250. As mentioned above, the TCXO_EN signal is dropped to the low logic level in the sleep mode to cut off power supply by the switching unit 250, and when the mobile terminal wakes up, is in an idle state or is operated, the TCXO_EN signal is controlled to be the high logic level so that power can be supplied to the flash memory 232 through the switching unit 250.

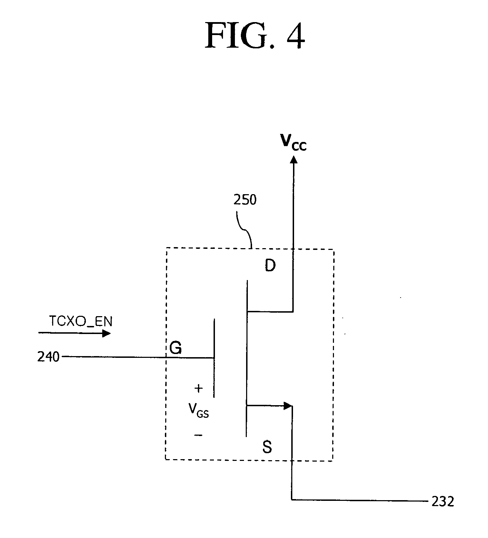

FIG. 4 illustrates the structure of a switching unit in accordance with the present invention.

As shown in FIG. 4, the switching unit 250 is formed as a transistor such as the FET, of which the gate terminal is connected with the controller 240, the drain terminal is connected with an external power supply unit such as the battery, and the source terminal is connected with the flash memory.

Accordingly, when the mobile terminal 200 is in communication, since the TCXO_EN signal applied from the controller 240 to the correction unit 220 has the high logic level, a voltage (V_{GS}) between the gate and the source is increased to beyond a certain voltage to turn on the switching unit 250.

In the sleep mode, since the sleep mode signal is applied from the controller 240 to the correction unit 220, namely, since the TCSO_EN signal applied from the controller 240 to the correction unit 220 has the low logic level, the V_{GS} is reduced to below a certain voltage to turn off the switching unit 250.

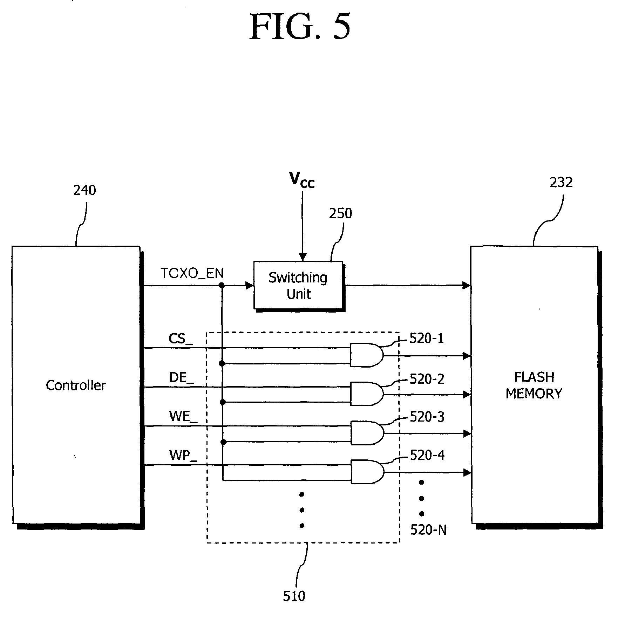

As mentioned above, in the mobile terminal for reducing power consumption, power applied from the external power supply unit such as the battery to the flash memory is cut off in the sleep mode, but in this case, malfunction may be caused as a chip select (CS_) signal, an output enable (OE_) signal, a write enable (WE_) signal and a write protect (WP_) signal are inputted. Thus, the mobile terminal for reducing power consumption in accordance with the present invention can additionally include a unit for preventing such malfunction, which will now be described with reference to FIG. 5.

FIG. 5 illustrates a connection relationship between a controller and the flash memory in accordance with the present invention.

As shown in FIG. 5, the operation signals applied from the controller 240 to the flash memory 232 are to pass through a malfunction preventing unit 510. The malfunction preventing unit 510 includes a plurality of AND gates 520-1~520-N each receiving an operation signal inputted from the controller 240 to the flash memory 232. Operation signals outputted from each operation signal output pin of the controller 240 to which a corresponding AND gate is connected and a TCXO_EN signal inputted from the controller 240 to the switching unit 250 are inputted to an input terminal of the AND gates 520-1~520-N, and an output terminal of respective AND gates 520-1~520-N is connected with a corresponding input terminal of the memory 232.

The AND gates are operated only when two inputted signals have a high logic level. Thus, when the AND gates receive the TCXO_EN signal with the low logic level, they outputs a signal with a low logic level although an operation signal is inputted thereto. Accordingly, in the sleep mode, every operation signal inputted to the flash memory 232 is cut off, thereby preventing malfunction.

As so far described, the mobile terminal for reducing power consumption in accordance with the present invention has such an advantage that by cutting off power supply to the flash memory in the sleep mode, power consumption can be reduced and a standby time of the mobile terminal can be lengthened.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A mobile terminal for reducing power consumption comprising:
a transmitting/receiving unit for transmitting and receiving signals to and from a network;
a storage unit for storing signals received through the transmitting/receiving unit;
a controller for controlling transmission/reception of signals, controlling a sleep mode function of the mobile terminal, and applying a sleep mode signal to a switching unit in the sleep mode; and
a switching unit for cutting off power supply to the flash memory according to the sleep mode signal.

2. The mobile terminal of claim 1, wherein the controller sets the mobile terminal in the sleep mode according to a certain reference such as a case where no function of the mobile terminal is used or the case where a folder or a flip is closed, and applies a sleep mode signal to the switching unit to cutoff power supply to the flash memory.

3. The mobile terminal of claim 2, wherein the sleep mode signal is a low enable signal, namely, a power cutoff signal.

4. The mobile terminal of claim 2, wherein the sleep mode signal is a TCXO_EN signal with a low logic level.

5. The mobile terminal of claim 1, wherein the controller controls to release the sleep mode according to a certain reference such as a case where a certain function is operated in the sleep mode, a signal is received, or the folder is opened, and control to supply power to the flash memory by applying a power supply signal to the switching unit.

6. The mobile terminal of claim 1, wherein the switching unit is formed as a field effect transistor (FET), of which a gate terminal is connected with the controller, a drain terminal is connected with an external power supply unit, and a source terminal is connected with the flash memory, so that when the switching unit receives the sleep mode signal, it is turned off.

7. The mobile terminal of claim 1, further comprising:
a malfunction preventing unit for preventing malfunction by interrupting an operation signal inputted to the flash memory in the sleep mode.

8. The mobile terminal of claim 7, wherein the malfunction preventing unit comprises a plurality of AND gates which receive operation signals to be inputted to the flash memory and a sleep mode signal in the sleep mode and prevent the operation signals from being inputted to the flash memory.

9. A method for reducing power consumption in a mobile terminal comprising:
applying a sleep mode signal to a switching unit, if the mobile terminal enter a sleep mode; and
cutting off power supply to a flash memory according to the sleep mode signal.

10. The method of claim 9, the mobile terminal enters the sleep mode according to a certain reference such as a case where no function of the mobile terminal is used or the case where a folder or a flip is closed.

11. The method of claim 9, the sleep mode signal is a low enable signal, namely, a power cutoff signal.

12. The method of claim 9, wherein the sleep mode signal is a TCXO_EN signal with a low logic level.

13. The method of claim 9, further comprising:
releasing the sleep mode according to a certain reference such as a case where a certain function is operated in the sleep mode, a signal is received, or the folder is opened, and;
controlling to supply power to the flash memory by applying a power supply signal to the switching unit.

14. The method of claim 9, further comprising:
preventing malfunction by interrupting an operation signal inputted to the flash memory in the sleep mode.
